# EUROPEAN PATENT SPECIFICATION

(11) **EP 2 530 962 B1**
(45) Date of publication and mention of the grant of the patent: **04.12.2019**
(21) Application number: 11360021.7
(22) Date of filing: 30.05.2011
(51) Int. Cl.: H04W 12/06, H04L 29/06, H04W 8/20, G06Q 20/20, H04W 60/04, G06Q 20/32, G06Q 20/40

(54) **AUTHENTICATION**
AUTHENTIFIZIERUNG
AUTHENTIFICATION

(43) Date of publication of application: 05.12.2012
(73) Proprietor: Alcatel Lucent, 91620 Nozay (FR)
(72) Inventor: Claussen, Holger, Straffan Kildare (IE); Kennedy, Irwin, Lodonderry BT47 6HY (IE); Samuel, Louis, Dalkey, Co Dublin (IE)
(74) Representative: Browne, Robin Forsythe

(56) References cited:
- EP-A2- 1 199 903
- WO-A1-2009/113057
- US-A1- 2009 029 677

## Description

### FIELD OF THE INVENTION

The present invention relates to a method of establishing a set of user equipment verification credentials from an authentication protocol within a wireless communications network, a computer program product, and system operable to carry out that method.

### BACKGROUND

Wireless telecommunications systems are known. In such systems, user equipment roam through a wireless telecommunications network. Base stations are provided which support areas of radio coverage. A number of such base stations are provided and are distributed geographically in order to provide a wide area of coverage to user equipment. When user equipment is within an area served by a base station, communication may be established between the user equipment and base station over associated radio links. A base station typically supports a number of sectors within a geographical area of service.

It is desired to enable user equipment to interact with real world objects. Use of user equipment, such as mobile phones, to access interactions with real world objects is particularly attractive since end users are familiar and comfortable with their mobile telephones.

Possible interactions with real world objects include, for example, convenient payment via mobile phone; payment can be performed by placing a mobile phone or other similar user equipment on a payment area on a shop counter. Furthermore, after successful payment an SMS receipt of the transaction may be sent to user equipment.

Further examples of interactions with real world objects may include allowing user equipment to download real world content by touching an object. For example, it may be possible to download a train timetable directly to user equipment by touching user equipment against a relevant ticket machine or timetable at a train station. A download to user equipment may be triggered by placing the phone on the content; for example, a ticket machine at a railway station. Alternatively, it may be possible to send a link to the timetable via SMS message or similar from where it can then be accessed by a user.

Furthermore, user equipment may be used as a keyless entry system for houses, cars and work places.

It will be appreciated that the examples of interaction given represent only a few of a large possible number of possibilities regarding local interaction between user equipment and real world objects.

In order to reliably provide interactive services between user equipment and a real world object, it is necessary to obtain an indication of identity from user equipment placed in the region of the real world object and for the trigger speed of such sensors to operate in a manner to disrupt the experience of an end user as little as possible.

US 2009/0029677 describes methods of mutual authentication in a mobile network. One method described comprises: generating a service ticket and a session key corresponding to a mobile station in accordance with an authentication data request for the mobile station. The service ticket and session key are encrypted using a user security key pre-assigned in accordance with the mobile station. The encrypted service ticket and session key are sent to the mobile station by using a control message. The mobile station is authenticated by analysing user mutual authentication information received from the mobile station. Another authentication method described comprises: sending a base station a user data response message including a subscriber identifier if a user data request message is received from a base station. The user then receives, from the base station, a user authentication request message including at least one service ticket and session key encrypted with a user security key. The method includes the step of decoding the service ticket and session key using the pre-stored user security key, and the step of sending the base station a user-authentication response value including a random value, a random value encrypted with the decoded session key and the decoded service ticket. If a random value is received from the base station, a mobile communication system is authenticated by comparing the sent random value with the received random value.

EP 1199903 describes a method for monitoring a mobile telephone without activating the mobile telephone. According to the method described, a base station is operable to trigger a mobile phone to transmit its identification parameters, without the user of the mobile phone becoming aware of that release of identification parameters. According to the method described, a base station operates to trigger a normal mobile terminating call and request mobile identification parameters, but the trigger is terminated before a call set-up command is sent. Thus before receiving a set-up signal the connection to the mobile phone is terminated by sending a channel release signal.

WO 2009/113057 describes apparatus by which a mobile station (user equipment) may be used as a medium to initiate, activate or confirm payments. In one embodiment, a shielding is provided to define a coverage area, and shield from radio signals originating outside the coverage area. An antenna is provided associated with the coverage area, and coupled to a transceiver. The transceiver is operable to communicate with any mobile station placed in the defined coverage area. A service control unit is provided and arranged to be responsive to communication between the transceiver and mobile station. A service station providing a product or service in proximity to the coverage area is operable to provide a product or service responsive to the service control unit. In one embodiment the system further comprises an application server in communication with the cellular network, operable to receive ID of the mobile station from the network and, in some embodiments, operable to debit a user associated with the mobile station for the provision of a product or service.

It is desired to provide a method of verifying the identity of authenticated user equipment to enable rapid, secure interactions.

### SUMMARY

The present invention is directed to subject-matter as disclosed by the appended claims.

A first aspect provides a pre-authentication method as claimed in claim 1.

In a time where voice and data revenues are declining, mobile operators are keen to diversify their business by providing new services beyond just providing access to calls via a core network. By enabling interactions with real world objects using user equipment an end user may use their existing relationship with the cellular network and phone and a mobile operator will typically have most of the infrastructure in place to provide services based on such interactions.

Such arrangements may be particularly advantageous if implementations ensure no software or hardware modifications are required to existing user equipment and the methods work with existing 4Bn+ user equipment. Provision of an appropriate interrogation unit may provide extremely accurate positioning information since it can work indoors and be more accurate than GPS or WiFi, together with secure SIM based authentication, allowing re-use of an existing billing relationship between user equipment and a mobile network operator, thereby creating a powerful new platform.

In order to reliably provide interactive services between user equipment and a real world object, it is required that local interactions between user equipment and real world objects are only triggered by the user equipment which wishes to download or otherwise have access to real world content. Extraction of a unique identifier from user equipment in the region of a real world object can ensure that interactive services are provided only to the user equipment requesting them.

Typically the interaction between a real world object and user equipment requires the presence of some kind of interrogation unit or sensor to allow a unique user equipment identifier to be extracted from user equipment in a short range, or small scale, coverage area provided by the interrogation unit associated with a real world object. Any such interrogation unit must operate in such a way to allow existing cellular network infrastructure supplied by usual macro base stations in a wireless telecommunications network to be complemented without significant disruption.

Interactions with real world objects require short range detection and full authentication of user equipment in order to utilise most fully the resources, for example, end user billing or payment information, already available to a mobile operator. In interrogation units providing a UE sensing system, trigger speed is a very important factor. Due to different implementations of standards in mobile phones, it has been found that interrogation unit sensing trigger speeds (for example, for systems based upon extraction of UE identity using "Local Area Update" techniques) can be variable, ranging typically from 2-5 seconds. A problem exists, however, that, according to such a system, a UE's identity may not be confirmed as authentic at the time of interacting with a real world object. It may previously have been authenticated in the region of a sensor, but for example, at the time of interaction with a real world object, a UE identity may be falsified. Aspects described herein recognise that it is possible to carry forward a pre-established authentication relationship to the moment of transaction execution.

The first aspect provides a method for increasing effective trigger speed of cellular sensors such as identity interrogation units. Reduction of triggering time without sacrificing integrity of a full identification system, for example, full authentication of user equipment identity, is highly desirable. The first aspect recognises that pre-authenticating the released indication of identity received from user equipment can be advantageous. Accordingly, such authentication may occur by communicating with a greater communication network, such as a mobile network provider core network, to establish full authentication of a user equipment identifier. Such full authentication of identifier allows for reliable billing of an end user, and typically involves cryptographic or other shared secret techniques.

The first aspect recognises that an effective triggering time experienced by an end user may be reduced by introducing a two-step sensing, authentication and validation method. It will be appreciated that it is possible to acquire an indication of identity from user equipment operating in the vicinity of a sensor in advance of those user equipment being placed against a real world object and being asked to "interact" with that real world object. That is to say, before user equipment is placed on the sensor. It is also possible to pre-authenticate user equipment operating in the vicinity of a sensor.

Establishing a shared set of user equipment verification credentials for future validation of the authenticated user equipment identity prevents a requirement for further authentication of the user equipment identity using the authentication protocol. Accordingly, rather than requiring the time required to perform full authentication and communication with a core network, verification credentials which comprise a new shared secret known only to a pre-authenticated user equipment and the interrogation unit can be used to verify the identity of a pre-authorised user equipment. The verification credentials may be stored locally within the interrogation unit and thus the need to communicate with layers of a full wireless telecommunication network, for example, a core network, can be avoided.

In one embodiment, the authenticating step comprises communicating with a core network of a service provider to authenticate the user equipment identity using the authentication protocol. Authentication procedures typically comprise cryptographic shared secret techniques, such that a key known only to a mobile operator and user equipment associated with that mobile operator is used to authenticate user equipment identity. In one embodiment, the authentication protocol comprises authentication of user equipment identity by means of a cryptographic shared secret.

In one embodiment, the shared set of user equipment credentials comprise at least one new shared secret. Accordingly, there is no requirement to re-authenticate user equipment at a later stage provided the new shared secret, generated as part of an authentication procedure, is determined to be correct. That is to say, the new set of user equipment credentials can replace authentication, and provide security of knowledge that a user equipment identity is correct, whilst occurring in a shorter timescale since full authentication is not required.

In order to extract a user equipment identifier, an interrogation unit (for example, comprising a pre-authentication unit and a verification unit) may be operable to communicate with user equipment within a radio coverage area supported by the interrogation unit. Accordingly, an interrogation unit may have the ability to determine the radio environment in which it is deployed. That is to say, it is operable to listen to downlink and uplink signals within the network on all carriers of potential interest, from all base stations of potential interest.

In order to establish communication with user equipment, an interrogation unit has the ability to set its downlink radio signal or signals to match, for example, in frequency, scrambling code, location area code, and other similar downlink communication parameters, one or more cells in the area that user equipment exists. The downlink of an interrogation unit can be set such that user equipment will typically be monitoring those downlink channels (or similar), or camping upon those downlink channels (or similar) in a macro network. Such an arrangement seeks to minimise the time it takes for the interrogation unit to establish a viable communication link with the user equipment in its coverage area.

If multiple macro network downlink signals are possible candidates for communication with user equipment in a location, for example at the overlap between coverage areas provided by adjacent base stations, multiple carriers can be emulated to ensure that all user equipment passing by, no matter which cell they are served by, can still be detected. It will be appreciated that in areas where two or more service providers are providing coverage on different frequencies, in order that the detector works across all frequencies it may be necessary to allow a detector to work across or impersonate those same multiple frequencies in its downlink.

Alternatively, the service providers could agree and nominate one or more frequencies to be used to establish communication with user equipment. This frequency may be reserved exclusively for this purpose or it may be in use. Each service provider may then instruct all of their user equipment to seek out this frequency with particular downlink channel characteristics. This may be done by populating the neighbour list of all cells to contain these details. e.g. In UMTS a particular scrambling code and location area for each service provider. The detecting equipment may then radiate on these agreed frequencies with the agreed downlink characteristics. By reducing the number of frequencies that need to be radiated on, the detectors cost reduces.

The result of impersonation of downlink characteristics of the greater surrounding telecommunications network is that cells supported by the detector, albeit short range cells, automatically become suitable candidates for a cell selection or reselection procedure already known to user equipment within a macro scale wireless network.

Ensuring extraction of a unique identifier occurs quickly assists in minimising disruption to the greater network and inconvenience to an end user seeking interactive services.

In one embodiment, the step of emulating comprises the steps of:
transmitting a downlink signal comprising radio communication characteristics substantially identical to at least one of the network nodes recognisable by the user equipment determined to be a serving network node of said user equipment.

Accordingly, by emulating downlink transmissions as if from a base station, or other network node which supports the user equipment serving cell, very rapid communication with user equipment can be established.

In one embodiment, the step of emulating comprises the steps of:
transmitting a downlink signal comprising radio communication characteristics substantially identical to at least one of the network nodes recognisable by the user equipment determined to be in a neighbour list of network nodes maintained by the user equipment. Accordingly, by emulating downlink transmissions as if from a base station, or other network node which is already in user equipment neighbour lists, it is likely that the user equipment will be monitoring for, and expecting to detect transmissions from such base stations and very rapid communication with user equipment can be established.

In one embodiment, the step of emulating comprises the steps of:
transmitting a first downlink signal comprising radio communication characteristics substantially identical to at least one of the network nodes recognisable by the user equipment to discover user equipment in a first predetermined area, and
transmitting a second downlink signal comprising radio communication characteristics substantially identical to at least one of the network nodes recognisable by the user equipment. Accordingly, a first signal may be used to determine, in slow time, a list of user equipment identities in a predetermined coverage area, for example, in a railway station building, and that slow time list, or discovery step, may become particularly useful if a second downlink signal is used, for example, by railway station turnstiles, to effect full authenticated identification of user equipment, since the number of possible user equipment which could be at a turnstile will not be an entire network worth of user equipment, but merely those already determined to be in the station building. Such pre-emptive discovery emulation may assist in speeding up a further process, for example payment, or assist in the implementation of paging processes, by minimising necessary paging options.

In one embodiment, the step of triggering, obtaining or determining an indication of user equipment identity comprises the steps of:
causing the user equipment to initiate a location area update procedure.

Various mechanisms exist in a wireless communication network to extract or exchange unique identifiers from user equipment. One such mechanism is a location area update procedure, during which user equipment passes a unique identifier, usually its IMSI, to the network. Other mechanisms also exist for extracting unique identifiers from user equipment; for example, paging messages may be responded to by user equipment and then, once connection is established, the interrogation unit may instruct or query user equipment, resulting in the release of a unique identifier.

In one embodiment, the step of causing the user equipment to initiate a location area update comprises the steps of: emulating the downlink radio communication characteristics of at least one of the network nodes with a signal strength sufficient to be received at the user equipment greater than a corresponding signal transmitted by the network node being emulated. Accordingly, the user equipment may determine, whilst in a coverage area supported by the interrogation unit, that the unit is supporting a cell which appears to be a more suitable candidate for good communication with the greater network. Such determination may result in user equipment requesting cell reselection, and, as part of that cell reselection, a location area update may be triggered.

In one embodiment, the method further comprises the steps of:
transmitting an instruction to change the user equipment cell reselection parameters.

Accordingly, a cell supported by the interrogation unit may be forced to appear to user equipment as a more suitable candidate for good communication with the greater network. Such determination may result in user equipment requesting cell reselection, and, as part of that cell reselection, a location area update may be triggered.

In one embodiment, the method further comprises the steps of:
transmitting an instruction to the user equipment to re-read downlink communication channel communications. It will be appreciated that user equipment may not automatically read all information transmitted on a downlink channel supported by the interrogation unit.

If the unit is emulating the serving cell, but with a different location area code, transmission of an instruction to reread communication channels may result in user equipment determining that a location area code has altered and a location area update procedure may be triggered.

In one embodiment, the method further comprises the steps of:
transmitting an interference signal on a radio channel corresponding to a communication channel from at least one of the network nodes recognisable by the user equipment determined to be a serving network node of the user equipment. Accordingly, if user equipment in the coverage area supported by an interrogation unit experiences significant interference on the serving cell downlink, it may be operable to request a transfer to an alternative cell. That cell may be supported by the interrogation unit and may have a different location area to that of the serving cell. Injection of interference may thus result in user equipment reselecting a cell, determining that a location area code has altered and triggering a location area update procedure.

In one embodiment, the indication of identity comprises an IMSI or TMSI.

A second aspect provides a computer program product, operable when executed on a computer, to perform the method steps of the first aspect.

A third aspect provides a system as claimed in claim 10.

Establishing a shared set of user equipment verification credentials for future validation of the authenticated user equipment identity prevents a requirement for further authentication of the user equipment identity using the authentication protocol.

In one embodiment, the authentication logic is operable to communicate with a core network of a service provider to authenticate said user equipment identity using said authentication protocol. Accordingly, the authentication logic is able to transmit information relating to user equipment identity and receive information to authenticate that identity.

In one embodiment, the authentication protocol comprises authentication of user equipment identity by means of a cryptographic shared secret.

In one embodiment, the shared set of user equipment credentials comprise at least one new shared secret.

In one embodiment, wherein the transmission logic is operable to transmit a downlink signal comprising radio communication characteristics substantially identical to at least one of the network nodes recognisable by the user equipment determined to be a serving network node of the user equipment.

In one embodiment, wherein the transmission logic is operable to transmit a downlink signal comprising radio communication characteristics substantially identical to at least one of the network nodes recognisable by the user equipment determined to be in a neighbour list of network nodes maintained by the user equipment.

In one embodiment, wherein the interrogation logic is operable to transmit a paging request to the user equipment on the downlink signal comprising radio communication characteristics substantially identical to at least one of the network nodes recognisable by the user equipment.

In one embodiment, transmission of the paging request comprises transmission of a series of user equipment pages, each addressed to a user equipment in the wireless telecommunications network.

In one embodiment, transmission of the paging request comprises transmission of a series of grouped user equipment pages, each addressed to a group of user equipment in the wireless telecommunications network.

In one embodiment, the interrogation logic is operable to cause the user equipment to initiate a location area update procedure.

In one embodiment, the interrogation logic is operable to cause the user equipment to by emulating said downlink radio communication characteristics of at least one of said network nodes with a signal strength sufficient to be received at said user equipment greater than a corresponding signal transmitted by said network node being emulated.

In one embodiment, the transmission logic is operable to transmit an instruction to change the user equipment cell reselection parameters.

In one embodiment, the transmission logic is operable to transmit an instruction to the user equipment to re-read downlink communication channel communications.

In one embodiment, the unit further comprises interference logic operable to transmit an interference signal on a radio channel corresponding to a communication channel from at least one of the network nodes recognisable by the user equipment determined to be a serving network node of the user equipment.

In one embodiment, the indication of identity comprises an IMSI or TMSI.

Verification credentials established as part of the pre-authentication are used to verify the identity of user equipment, without the need to re-authenticate, and thus without the need to contact a mobile operator core network. Thus by adding an extra step, pre-authentication, rather than authenticating at the same time as a real world object detects a user equipment is in close proximity to a proximity sensor, effective trigger and effective authentication times experienced at a proximity, or verification sensor can be reduced.

The method further comprises: receiving an indication of user equipment identity for those authenticated user equipment determined to be in a predetermined geographic discovery area; and paging those authenticated user equipment determined to be in the predetermined geographic discovery area. Accordingly, paging can prove an effective and efficient means to determine which user equipment in the general vicinity of a proximity sensor are then actually "on" the sensor. Accordingly the proximity sensor itself does not need to actively extract any indication of user equipment identity from user equipment, since that step of recognising users which might be placed on the sensor has already occurred. Once a mobile responds to a paging message, the sensor uses information obtained by the larger cell to interrogate the user equipment and verify its identity without the need for a full uthentication protocol to be performed. That is to say, no full contact with the core network is required, and a "security check" is made based on verification credentials predetermined by a full authentication process. This will speed up the "effective" triggering process since the initial camping and authentication process that takes the majority of time is performed in advance when the mobile enters a larger cell.

The paging message sent by the sensor results in the establishment of a radio resource control (RRC) communication with the UE. Over this connection, the base station requests that the UE integrity protects or ciphers messages transmitted based on predetermined verification credentials. Only the authenticated UE could integrity protect or cipher information transmitted since it knows the pre-determined verification credentials. Hence, the sensor can be confident of the authentic identity of the UE and therefore attribute a transaction or other action to the correct pre-authenticated UE.

In one embodiment, the method further comprises:
determining a time difference between authenticated user equipment entering the predetermined geographic discovery area and authenticated user equipment responding to the paging. In one embodiment, the method further comprises:
calculating an indication of average time difference across a set of authenticated user equipment. In one embodiment, the method further comprises:
   adjusting the predetermined geographic discovery area and/or a predetermined paging area in response to the determined time difference.

Accordingly, the coverage of two areas supported by an interrogation unit (comprising, for example a pre-authentication unit and a verification unit) may in some embodiments be optimized by observing time differences between "camping and authentication" performed by a pre-authentication unit, and an actual "sensing event" performed by a verification unit. If there is a large time difference between "camping and authentication" and "sensing" events, this may indicate that the pilot coverage of a pre-authentication unit is too large. This can be sub-optimal since a UE which is located in such an area it may not make or receive any calls while camped on the pre-authentication unit's pilot signal. In such a case, the pilot power of a sensor may be reduced by a predetermined step. If there is no time difference between events, this can indicate that a pre-authentication unit's pilot signal coverage is too small. This can be sub-optimal, since it can result in a sensing/proximity sensing delay. If there is no gap between events, "camping and authentication" is not completed before the "sensing" event. In such a case, the pilot signal may be reduced by a predetermined step. The time difference observed between "camping and authentication" and "sensing" events can, according to embodiments, be monitored, and the coverage areas of pre-authentication and verification units comprising a full interrogation unit can be optimized based on predetermined values as an iterative process.

In some embodiments, once a communication link with user equipment is established, for example, via paging, the method may comprise repeatedly requesting a set of power measurement reports from the UE. In some embodiments, those measurement reports may be used to calculate an estimate of distance to user equipment from a sensor. In some embodiments, upon a power measurement crossing a predetermined threshold, an action is performed. Accordingly, contact may be established with pre-authorised user equipment before it is in direct contact with a verification sensor, and only once it is determined to be in very close promxinimy, as indicated by a measurement report crossing a predetermined threshold, the verification sensor will perform a predetermined action, for example, opening a door or downloading a timetable.

This is an enhancement to, for example, simply paging the UE and receiving a response, and verifying pre-determined credentials before trigger an action. The enhancement reduces the latency between touching a phone against a verification or proximity sensor and the transaction being performed. In some embodiments, use of paging to trigger a transaction may introduce delays. For example, a UE may take time to respond to the paging messages due a discontinuous reception cycle (DRx cycle) used to reduce power consumption. A DRx cycle may last somewhere between a couple of hundred milliseconds through to a few seconds.

To mitigate such delays and allow an action carried out more promptly, or immediately, in some embodiments user equipment may be contacted, for example, paged, in advance of being at the critical location to setup a connection with the sensor. A cellular sensor device, such as a verification unit, then requests a receive power measurement from the UE to establish its proximity to it and/or other transmitters, for example, other verification units. The transmitters can be housed in the sensor unit and/or be combined with transmitters housed in separate units, perhaps femto cells or other base stations. In some embodiments, measurements can be requested frequently, for example, many times per second, frequent measurement may allow better knowledge of a UEs proximity and/or rate of approach and thus speed up the time of detection.

In some embodiments, upon an indication of power measurement passing a critical threshold, a further action or transaction is performed.

### BRIEF DESCRIPTION OF THE DRAWINGS

Embodiments of the present invention will now be described further, with reference to the accompanying drawings in which:
Figure 1 illustrates schematically the main components of a wireless telecommunications system according to one embodiment;
Figure 2 illustrates schematically an interaction between a macro cell and detector in accordance with one embodiment;
Figure 3 illustrates schematically an interaction between a macro cell and detector in accordance with a further embodiment;
Figure 4 illustrates schematically a method according to one embodiment employing cellular sensing with femtocell based pre-authentication; and
Figure 5 illustrates schematically a method according to one embodiment employing cellular sensing with sensor based pre-authentication.

### DETAILED DESCRIPTION OF EMBODIMENTS

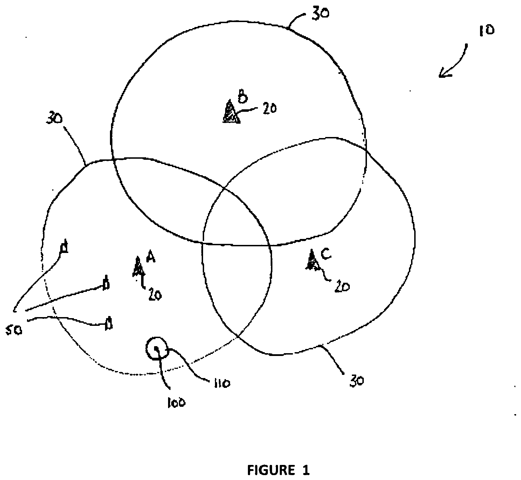

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided at distributed geographically in order to provide a wide area of coverage to user equipment 50. When user equipment is within an area served by a base station 30, communications may be established between the user equipment and the base station over associated radio links. A detector 100, in accordance with embodiments, is provided within an area of coverage 30 provided by a base station 20. Detector 100 is operable to quickly detect close proximity of user equipment 50 using a short range cellular sensor. The cellular sensor radiates downlink signals in a similar way to a base station 20. Embodiments described relate to different techniques for achieving fast identification, authentication then further verification of a user equipment 50 within an area of coverage provided by a detector 100.

Although the following embodiment is described in relation to a UMTS cellular system, it will be appreciated that techniques can be generalised to any cellular system including, for example, GSM, CDMA and LTE. In all such wireless systems there typically exists some mechanism whereby user equipment informs the network 10 of changes in location as it roams through the network. Such location updates are important in both idle mode (in which user equipment has no active collection with the network 10; for example, a voice call) and active mode (in which there is an active connection).

In idle mode, user equipment 50 informs the network of its location so that incoming paging messages from the network can be routed to an appropriate cell hosted by a base station or collection of cells.

In active mode, user equipment and the network 10 work together so that the user equipment remains connected to one or more base stations A, B and C as shown in Figure 1 at all times. In active mode, user equipment is operable to continuously assess signal strength received from each base station A, B and C in the area and react as appropriate. Possible reactions include switching the set of base stations a user equipment maintains an active link with and may further include switching on or adjusting a network 10 or user equipment 50 in some way, for example by switching on supplementary base stations in an area to maintain good connectivity with user equipment 50.

In UMTS location area is a concept used to denote a cluster of base stations or cells that together form a particular location. The cluster of cells which form a particular location area are typically neighbouring cells. For example, as shown in Figure 1, base stations A, B and C may all be allocated the same location area. It will be appreciated that mobile telecommunication network 10 comprises further base stations not shown in Figure 1. Those base stations located outside location area 1 will typically be allocated a different location area code.

It will be appreciated that in UMTS the term "location area" refers to cell groupings for user equipment operating in circuit switch mode. Another grouping, termed "routing area" may also exist for user equipment in UMTS, those user equipment operating in packet switch mode. Throughout what follows, the term "location area" is used to mean both circuit switch grouping and packet switch grouping of cells. That is to say, the term "location area" is used in its most general and functional sense.

User equipment 50 may roam within a location area without being asked to provide an identity or identifier. When user equipment strays outside location area 1 (in this case represented by base stations A, B and C), the network 10 requires to know where the user equipment 50 has roamed to and if user equipment 50 detects that it is outside location area 1, it provides its identification to the network 10 in accordance with existing network standards. Such location updates further allow incoming paging messages from network 10 to an appropriate base station (in area location 1, the appropriate collection of cells would be A, B, C), so that the paging message reaches the desired user equipment 50.

In order to reliably provide interactive services between user equipment and a real world object, it is required that local interactions between user equipment and real world objects are only triggered by user equipment which wishes to download or otherwise have access to real world content.

Furthermore, the interaction between a real world object and user equipment 50 may require the presence of a detector 100 in accordance with embodiments to allow a unique user equipment identifier to be extracted from user equipment in a coverage area provided by detector 100. A detector 100 must operate in such a way to allow existing cellular network infrastructure supplied by base stations A, B and C to be complemented without significant disruption. The detector must allow co-existence of interactions with real world devices with existing macro cellular networks whilst reusing the same frequency resources and minimising disturbance to those networks. Fast extraction of user equipment identifier by detector 100 allows new services to be offered based upon local interactions between user equipment and real world objects without causing significant disruption.

In order to extract a user equipment identifier, detector 100 must be operable to communicate with user equipment within a coverage area provided by a detector 100. Accordingly, embodiments of a detector have the ability to determine radio environment in which it is deployed. That is to say, detector 100 is operable to listen to downlink and uplink signals within the network 10 on all carriers of potential interest. Such operation allows detector 100 to discover the power levels of transmission of neighbouring cells and read broadcast information on those neighbouring cells. In the embodiments shown in Figure 1, detector 100 will be able to listen to downlink signals on carriers of interest being transmitted by base station A. Furthermore, since base station A will transmit an indication of its neighbour list (those base stations located in a similar geographical area), detector 100 will be alerted to the possible existence of base stations B and C.

In accordance with further embodiments, the "listening" or "sniffing" behaviour of detector 100 may be such that detector 100 can be utilised such that it can adapt its own broadcast and downlink signals as appropriate and synchronize the timing of its transmissions to those of a serving or neighbouring cell in that location. For example, in a UMTS wireless communications network, detector 100 may synchronize the timing of its transmissions (system frame number) with those of a serving or neighbouring cell.

In order that detector 100 can communicate with user equipment 50, detector 100 is operable to determine the radio environment in which it exists. In particular, in order to communicate with user equipment 50 the detector has the ability to set its downlink radio signal or signals to match one or more cells in the area that user equipment 50 exists and, more importantly, the downlink of the detector is set such that user equipment 50 may be monitoring those downlink channels or similar, or camping upon those downlink channels or similar in the macro network.

The term "downlink signal" refers to a logical entity providing service to a user equipment 50 and may, for example, include signals from femto, pico or other base stations providing full network service in wireless communication network 10. If multiple downlink signals are possible candidates in a location, for example at the overlap between coverage areas provided by adjacent base stations, multiple carriers are employed by a detector 100 to ensure that all user equipment passing by, no matter which cell they are served by, can still be detected. It will be appreciated that in areas where two or more service providers are providing coverage on different frequencies, in order that the detector works across all frequencies it may be necessary to allow the detector 100 to work across or impersonate those same multiple frequencies in its downlink.

The result of detector impersonation of downlink characteristics of the greater surrounding telecommunications network is that cells supported by the detector, albeit very small short range cells, automatically become suitable candidates for a cell selection or reselection procedure already known to user equipment 50 within the greater wireless network 10.

Use of a known cell reselection procedure allows quick detection independent of the parameter settings of a serving base station or macro cell. Of course, there may be some dependency regarding parameters set at user equipment 50, in terms of cell reselection implementation.

Impersonation of existing cells that user equipment 50 is expecting to see allows a convenient route to sensible communication with user equipment 50 over a small coverage area provided by detector 100. Detector 100 will not typically itself provide full radio network functionality. That is to say, user equipment cannot make and receive calls through connection to detector 100. Nonetheless, procedures which exist within the wireless communication network and typical wireless communication protocols may be used so that detector 60 may extract from user equipment 50 the unique identifier required to provide reliable interaction with a real world object.

Various mechanisms exist in a wireless communication network to extract or exchange unique identifiers from user equipment 50. One such mechanism is a location area update procedure, during which user equipment passes a unique identifier, usually its IMSI, to the network. Other mechanisms also exist for extracting unique identifiers from user equipment 50; for example, paging messages may be used to obtain a response from user equipment before the system then instructs or queries user equipment, resulting in the release of a unique identifier. In order to trigger these mechanisms it is essential that detector 100 is operable to successfully communicate with user equipment 50. That is to say, the detector 100 must be able to communicate in a way the user equipment 50 is expecting, or attempts to extract any information from the user equipment are likely to be unsuccessful.

In some known wireless communication systems each user equipment is made aware of its surrounding radio environment. That is to say, when communication with a base station is established, that base station broadcasts information to user equipment 50 regarding further base stations which may be found in the geographical area. That list of surrounding base stations is known as a neighbour list. It will be appreciated that a neighbour list, and the maintenance of a neighbour list at user equipment, allows the location of the roaming user equipment 50 within telecommunications network 10 to be determined with a minimum of unnecessary network signalling, since user equipment 50 is informed of those base stations with which it may be able to establish a communication link. The base station with which user equipment 50 communicates primarily and with which an active state would be maintained if necessary is referred to as a serving base station and it hosts a serving cell. Operation of user equipment 50 within a network will typically be controlled by messages received from the network and sent by the serving cell. It is the serving cell that determines, for example, a parameter (known as T reselection) which determines how long user equipment 50 needs to wait and before performing a cell reselection process, in the event that a serving cell no longer represents the "best" choice for communication between user equipment 50 and the network as a whole.

In embodiments of the detector, it is possible to override settings at the user equipment set by a serving cell which could prevent fast discovery of the detector. It is possible to do this by effectively impersonating the serving cell so that user equipment 50 believes it is still listening to the serving cell when, in fact, it is listening to transmissions from detector 100. Since the detector may be very precisely controlled, various parameters typically set by the serving cell may be set by the detector. In a UMTS cellular system such impersonation can be achieved and connection established by providing the detector 100 with an ability to have a higher receive power at user equipment 50 when it is in proximity of detector 100. Detector 100 may use the same location area code and may precisely match the frame timing and synchronization of the serving cell provided by the macro layer. As a result of simply seeing detector 100 more strongly, the result is that user equipment 50 listens to the transmissions of detector 100. Once the user equipment is listening to the downlink channels of detector 100 it is possible to control it.

In a UMTS system embodiment, the detector may be operable such that its broadcast channel contents include values that set parameters at the user equipment to suit detector purposes and the detector instructs the user equipment to re-read them if necessary. On re-reading the broadcast channels, user equipment in proximity of the detector may, for example, discover a location area code has changed, thereby necessitating a location area code update which extracts a user equipment identifier from user equipment 50 at the detector.

In alternative embodiments, if the user equipment does not quickly react to a changed location area code by, for example, detecting it itself, the detector may operate to page user equipment with a change to cell reselection parameters, thereby triggering a cell reselection evaluation procedure.

In some embodiments the detector may be operable to populate user equipment neighbour list with another cell under the creation and control of detector 100, then force reselection at the user equipment of that new cell, including the performing of a location area update. In such embodiments relative power levels and all related parameters are set to make the second cell attractive to user equipment such that it makes a fast decision and as a result performs a location area update quickly, thereby allowing detector 100 to extract a unique identifier from user equipment 50 in a short period of time.

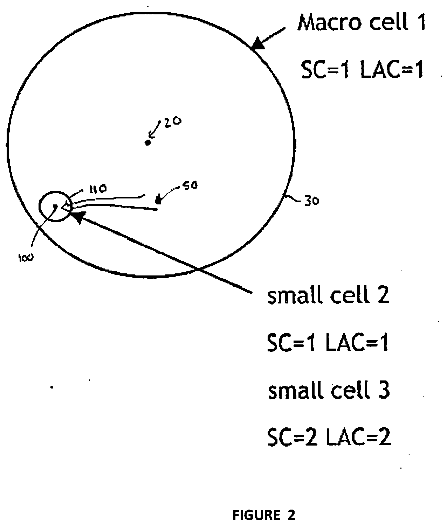

Figure 2 is a schematic illustration of a possible interaction between a macro cell and a detector.

In the embodiment shown in Figure 2, base station 20 supports a cell across a region of coverage 30. Within that region of coverage 30 there is provided a detector 100 which itself provides a region of coverage 110. Base station 20 supports a macro cell 1 in geographical region 30, having a scrambling code of 1 and a local area code of 1. Detector 100 supports two small cells in region 110, those small cells being known as small cell 2 with a scrambling code of 1 and local area code of 1, and small cell 3 with a scrambling code of 2 and a local area code of 2.

The detector 100 can impersonate serving cell, in this case macro cell 1, supported by base station 20, extremely closely. It does this by sniffing and determining the radio characteristics of macro cell 1 and then populating its own downlink channels with exactly the same information as that contained within the serving cell. In this embodiment the small cell 2 has an identical frequency, timing and other information as that contained by macro cell 1. In this embodiment the timing (system frame numbers) are also synchronized to the serving cell. The information is only modified in embodiments as necessary to achieve a location area update.

The cell serving the idle mode user equipment is supported by base station 20 and is part of the existing macro cellular network 10. Its parameter settings are difficult and expensive to change. It is therefore advantageous for a detector to be able to deal with those parameters being set to the worse case values with respect to what the detector wishes to achieve. As discussed previously, time reselection according to a UMTS cellular system is typically broadcast in system information messages broadcast on a channel of the serving cell. That instruction informs the user equipment how many seconds it must wait before selecting another cell to camp upon. Time reselection may be set to a worse case value by a base station of 31 seconds which, given that a detector located on a real world object aims to extract user equipment identity as quickly as possible, causes some issues and it will typically be desirable to ensure that the user equipment reveals its identifier in far fewer seconds, typically a fielder of 5.

As shown in Figure 2, the user equipment 50 is within geographical region 30 and camped normally on the macro cell network provided by base station 20. That macro cell 1 has a scrambling code of 1, a local area code of 1 and is supported by base station 20. It acts as the serving cell for user equipment 50. As user equipment 50 moves into geographical area 110 which may stand only a few centimetres around detector 100, it enters a region covered by small cell 2 and small cell 3 supported by detector 100. The detector impersonates the serving cell, macro cell 1, by radiating on the same carrier frequency the slot and frame synchronization identical to that of the macro cell. Due to the close proximity of user equipment 50 to small cell 2 supported by detector 100, the path lost to the macro cell 1 is very large. The power radiated by detector 100 in relation to cell 2 is less than cell 1, to minimise disruption caused by detector 100 to operation of the wireless telecommunications network generally. However, due to the close proximity of the user equipment to detector 100, the received power from detector 100 in respect of cell 2 is far greater than that received at the user equipment from base station 20 in respect of macro cell 1.

In one embodiment detector 100 is operable to support two small cells. As user equipment 50 is brought into the coverage area of detector 100 the user equipment listens to the downlink channel transmitted in small cell 2 which is under the control of the detector. The detector transmits a broadcast channel read message to all user equipment which exist in small cell 2. The broadcast channel read message is implemented by sending a paging type 1 message instructing all user equipment to check the broadcast channel for changes. The user equipment within small cell 2, which will typically only be 1 user equipment, given that the coverage area supported by detector 100 is so small, reads all change system information blocks in the broadcast channel and updates its local store of parameters.

In this embodiment, the detector is operable to ensure that as part of that updated broadcast channel information, there is an update to user equipment 50's neighbour list. The detector, as it emulates the serving cell, populates the user equipment neighbour list to include small cell 3, also supported by detector 100. The cell reselection parameters may also be changed to make cell 3 a very attractive option. Those parameters to be changed may include, for example, sintra, hysteresis factor, or other analogous parameters. Detector 100 is operable to ensure that cell 3 is radiated on a higher power than small cell 2, thereby making it an attractive option for reselection. Changing the cell reselection parameters using small cell 2 triggers another cell reselection procedure. User equipment 50 is then operable to select cell 3. As a result of the different location area code allocated to small cell 3 (location area 2, as opposed to location area 1 supported by macro cell 1 and small cell 2), the user equipment attempts to perform a location area update.

Detector 100 uses the location area update mechanism and the communication establishment initiated by that mechanism to query user equipment 50 for a unique identifier, typically an IMSI or TIMSI. Although detector 100 cannot itself offer full network service to user equipment 50, it is operable to communicate with the network 10 via some form of backhaul, be it wireless or an IP network or wired, such that it can obtain further information regarding user equipment 50 from the wireless network 10 once a unique identifier has been obtained. In particular, detector 100 uses standard authentication mechanisms and authentication protocols to verify user equipment identity. Such authentication mechanisms typically involve retrieving cryptographic key information and shared secrets from a core network (via, for example, an AAA server). Use of identity authentication mechanisms allows detector 100 to confirm the user equipment identity with the same level of assurance as used for cellular billing. Once user equipment identification has been performed, the detector 100 is operable to reject the location area update request from user equipment 50 with an appropriate message; for example, that the cell is too busy.

Ensuring that the location area update request is unsuccessful serves to minimise unnecessary data traffic within the network 10 and ensures that the service offered to user equipment 50 is minimally disrupted whilst user equipment 50 is interacting with detector 100.

Since no successful location area update has been performed by user equipment 50, the user equipment returns to idle mode count normally in macro cell 1. If the received power from detector cells (small cell 2 and small cell 3) is high relative to macro cell 1 received power, the user equipment 50 may only return to monitoring the macro cell carriers in idle mode camp state when it is removed from being in proximity to the sensor; that is to say, when it is removed from coverage area 110.

In some embodiments, when the location area update rejection message is sent by detector 100 the detector is also operable to switch off the detector pair of cells (small cell 2 and small cell 3) at least until the user equipment 50 is removed from the sensor. Such embodiments may allow user equipment 50 to immediately return to be camped normally upon macro cell 1.

Alternatively, in the case where no location area update has been successfully received, the user equipment may simply leave the coverage area of the detector cell and return to being camped normally on macro cell 1.

An alternative embodiment to that shown in Figure 2 is to use only one cell at a detector. According to such an embodiment, small cell 2 may be provided with a different location area code to that of macro cell 1. On issuing the broadcast channel re-read message by issuing a paging-type message, user equipment 50 may, in accordance with user equipment manufacturers' implementations, perform a location area update if it detects a change in location area code. If user equipment 50 is operable to do so, the detector again proceeds to establish the user equipment unique identifier (for example, IMSI or TIMSI) and can authenticate it using the cryptographic store of the core network as described previously. Again, detector 100 is operable to send a reject message in relation to the user equipment's request for a location area update and the user equipment returns to being camped normally on macro cell 1.

In this embodiment, identically to the previous method, the objective of the user equipment returning to being camped normally on macro cell 1 can also be achieved by switching off the detector control cells or by user equipment leaving the coverage area 110 of detector 100.

In accordance with a further embodiment, it may be that user equipment 50 is operable to automatically detect the presence of cell 2 and, more particularly, the location area code of cell 2 having changed. In such user equipment implementations user equipment automatically synchronizes to the dominant power on scrambling code 1 provided by detector 1 in respect of small cell 2. User equipment automatically then reads the broadcast channel of small cell 2 and, on discovering the local area code has changed, performs a location area update. In such implementation it is not necessary for the frame synchronization of small cell 2 to be matched to the serving cell. Furthermore, it can be seen that the detector need not be operable to issue a broadcast channel modification paging message in order to trigger a location area code update mechanism at user equipment 50.

### IMPERSONATION OF NEIGHBOUR CELLS

In alternative embodiments the detector may emulate a neighbour rather than the serving cell. As part of the procedure whereby the serving cell's scrambling code is detected, it will be appreciated that a neighbour list broadcast by the serving cell may also be read. The detector may then be operable to select a scrambling code to emulate a base station in the neighbour list.

In a further alternative embodiment it is possible to select a scrambling code not in use by either neighbouring cells or the serving cells, although this may lead to some implementation issues. In any case, according to these further embodiments the location area of the detector small cell is set to differ from that of the serving cell's location area code. In accordance with these embodiments, when user equipment comes into close proximity of the small cell supported by the detector the user equipment performs a cell reselection procedure to the cell supported by the detector and consequently requests a location area update.

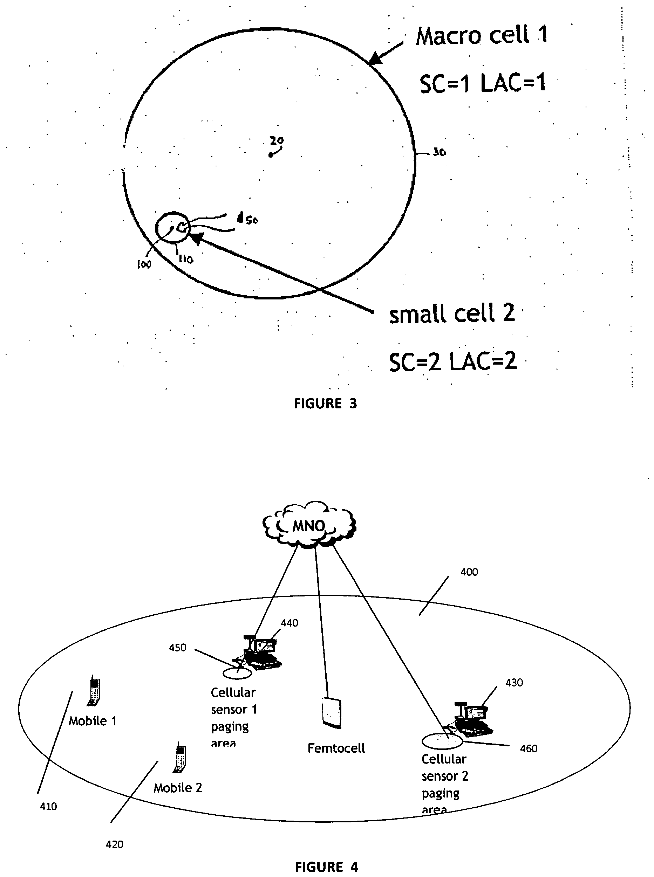

An alternative technique to that of impersonation of a serving cell is to present a detector cell such that it emulates a serving cell neighbour. Figure 3 illustrates schematically the interaction between a macro cell and detector, according to a further embodiment. Identical numerals have been used throughout Figure 3 as appropriate. In the scenario illustrated by Figure 3 the macro cell 1, supported by base station 20 which acts as a serving cell, has a scrambling code of 1 and a location area code of 1. User equipment 50 in idle mode treats this cell as its serving cell.

Detector 100 supports a cell, small cell 2, in a geographical region 110 surrounding itself. In this case the detector is operable to support the small cell 2 having a scrambling code and location area code which have been selected to be different to those of the serving cell, but to match those of a neighbouring cell; that is to say, a cell in the serving cell neighbour list. As an idle user equipment 50 moves towards a detector, as shown by the arrow, within macro cell 1 and finds itself within region 110, within which sensor cell 2 is supported by the detector, the user equipment is operable to detect the stronger signal relating to cell 2 and invokes the location area update mechanism since cell 2 has a different location area code.

Having invoked a location area update procedure, the detector is able to extract a unique identifier, for example an IMSI or TIMSI, from user equipment 50. As described previously, the location area update request from user equipment 50 is rejected by detector 100 following formal identification and authentication by use of communication between detector and the network 10. Furthermore, as previously described, the location area update request may be rejected and user equipment 50 returns to being camped normally again on serving macro cell 1.

In some instances, user equipment 50 may take significant time to detect and reselect to the small cell 2 supported by detector 100. This is typically due to user equipment implementation differences and may be due to the fact that the detector scrambling code is not in serving cell 1's neighbour list or due to settings of parameters governing reselection determined by broadcast channel information messages sent by the serving cell to user equipment 50. In such cases the downlink signal is transmitted by the detector which ensures it is of a greater strength than any other nearby cell. An attempt to establish a connection, for example by making a call or sending a text message, would trigger quick reselection and overcome implementation and parameters set by the serving cell.

In some embodiments the "call" could be to a multi-digit number representing a PIN which may be sent to the detector for verification. Alternatively, the number could indicate a selection to a higher level application. That is to say, in a proximity payment application, the number "called" from user equipment 50 may represent the account from which the transaction is to be deducted; for example, electronic wallet 1 or electronic wallet 2 could be represented as 0001 and 0002 respectively.

### INITIATION OF LOCATION AREA UPDATE PROCEDURES

Central to the embodiments described previously is the aim of establishing initial communication by a user equipment with the detector. In a UMTS cellular system, an initial link between user equipment and a base station is performed in a RACH/FACH exchange with a base station. Once user equipment 50 has established a communication link with a base station the following steps are performed accordingly:
1 A unique identifier, for example an IMSI or TIMSI, is retrieved from the user equipment;
2 The identity of the user equipment is authenticated using a standard cellular authentication procedure;
3 The user equipment is sent a rejection message. That rejection message may, for example, be that the cell load is too high; and
4 The user equipment returns to an idle mode and returns to being camped normally on the original serving cell.

In the above-mentioned steps the aim of the procedure is to utilise a known location update mechanism, although no location update is performed because no location update to a cell supported by detector 100 is possible.

Since no successful location area update is performed by user equipment, returning to the camped normally state on the original serving cell involves no more communications with the network and therefore minimises unnecessary network data traffic.

The return to a normal camped state is assisted by user equipment 50 being removed from the vicinity of detector 100. For a very close proximity detector, removal from the vicinity may involve movement only of the order of 10s of centimetres. For a longer range detector still operating to serve only a small cell area, the user equipment may need to move several meters or 10s of meters. The short range nature of the cell supported by detector 100 assists the return to the serving cell, since the received power at the user equipment from the sensor drops off steeply as the user equipment is moved away from the detector. As a result, the original serving cell's downlink channels will again be read and camped upon.

In order to effectively emulate a serving cell or a neighbouring cell it is desirable to minimise the time it takes user equipment to establish a connection with the detector cell and reveal its identity. In most cellular systems broadcast information is transmitted on downlink channels from base stations and, in particular, system information scheduling blocks are sent from base stations to user equipment within the cell. It is important to optimally schedule this information or similar information to be sent from a detector to user equipment placed in the coverage area of the detector so that the minimal amount of information is given as often as possible for the user equipment to successfully establish a connection with the detector cell. The system information scheduling transmitted by the detector cell downlink may be scheduled to be repeated as often as possible, such that any user equipment that commences reading the broadcast information at any point in time must listen for a minimal period of time before it has all the information it needs to commence communication with the detector.

In a UMTS cellular system, system information blocks are scheduled and transmitted by a cell. The cellular sensor in UMTS schedules those system information blocks minimally and as often as possible, thus only the system information blocks strictly required to enable the triggering of a connection establishment with a base station would be transmitted and only the information elements strictly required would be transmitted.

### EXTRACTION OF UNIQUE IDENTIFIER VIA PAGING

To page user equipment it is necessary to first get user equipment to listen to the detector cell. Such emulation has been described in relation to previous embodiments.

Use of paging messages requires user equipment to be listening to paging channels of a cell under the control of the detector. Use of paging messages enables embodiments to relinquish some reliance upon the need for a location area code to differ, or the triggering of a location area update mechanism in order to extract a unique identity. Furthermore, use of paging messages ensures that there is no need to rely on user equipment reading all of the system information blocks transmitted by a detector broadcast channel. In order to use paging messages a user equipment is required to be synchronized to a detector cell and listening and reacting when addressed to paging messages.

A paging message may avoid the need for user equipment to read system information blocks and thus the process of establishing contact, and extracting a unique identifier from user equipment can be significantly quicker if a detector is able to use a paging message.

### PAGING OPTIONS

It is possible to continuously page each and every user equipment in a network by continuously paging all user equipment unique identifiers. This is easily imagined as being like a register of user equipment unique identifiers and may, for example, be a list of user equipment IMSI and TMSI identifiers. It will be appreciated that such a "roll call" may take a significant amount of time and in order to extract the unique identifier from a user equipment placed on a detector most efficiently it may be necessary to employ a more efficient paging scheme. Various schemes may be employed to reduce the number of identifiers that must be continuously paged. In one embodiment only a sub-set of TMSIs inside a particular location area of interest may be paged. The sub-set may be determined by various means; for example, the detector cell may query a regular macro cell cellular network for a list of user equipment in a particular location area code. In other embodiments the number of user equipment identifiers that must be paged may be reduced by assigning network assigned identifiers in a way that the detector could, independent of direct communication with the core network, deduce a sub-set of user equipment identifiers to page. For example, a set of all possible TMSIs in a location area may be deduced based on the particular area code in use. That is to say, location area code 10 may correspond to set number 10 of TMSI identifiers. In such an arrangement the set could contain a list of, for example, 100 user equipment unique identifiers to page.

### PAGING GROUPS OF USER EQUIPMENT

In some cellular systems it is possible to include a user equipment in a group and page by a group identifier. User equipment then listens for paging messages to a group identifier. Multiple user equipment may belong to one group identifier. Thus, a single paging message may be sent to trigger a response from many user equipment. Each user equipment within network 10 may be assigned temporarily, or at all times, a group identity. Various arrangements may be employed to determine which sub-set of paging groups a detector should continuously or non-continuously page. In some embodiments, for example, a set of group identities may be partitioned, depending on location area.

In some embodiments it is possible to determine a set of user equipment identities in an area by deploying a cell, a base station or group of base stations that discover all user equipment in a particular vicinity. That determination may be a preparation step and may be performed with less demanding time constraints than that required from the detector. For example, a cell may provide full service and thus transmit over a large area and discover all user equipment that enter that area. All those user equipment identities may then be held centrally or forwarded to detectors in the area for paging purposes. A user equipment identity can be any particular identifier and any way of initiating communication with user equipment.

An example of such a method to determine a set of user equipment identifiers would be for use in a mass transit turnstile system. In such a system it is important that the reaction time to user equipment present is as fast as possible at the turnstile. Any delay may interrupt the flow of people through the turnstile. Thus, to ensure the fastest possible detection of a handset it may be necessary to continuously page the set of handsets that are detected in the vicinity. When a user equipment reacts to a paging message, full authentication can be performed. That is to say, it is possible to provide base stations in the area of the turnstile that detect the presence of user equipment when they first enter the area, that list of user equipment in the area is held locally and then made available to detectors located on the turnstiles themselves. Furthermore, a separate "discovery" detector may be provided separately to an individual UE identifier detector. Such a discovery detector may have a larger coverage area and support a larger cell than the individual UE identifier detector. The individual UE detector may support a smaller cell at a lower power, but be operable to communicate with the discovery cell, in order to access information discovered by the discovery cell.

### UNIVERSAL NEIGHBOUR TECHNIQUES

It is possible to initiate equivalent PLMN or same PLMN or allowed peer PLMN may be used as user equipment home PLMN. User equipment may be operable to perform fast reselection to such a PLMN cell. A single change to all cells in all PLMNs to include one extra cell as a neighbour may allow a detector and network to operate and discover user equipment quickly. The same details may be used for each and every cell; for example, by use of a reserved cell configuration and, in particular, a reserved scrambling code and location area code to represent an equivalent or same PLMN for all user equipment.

In addition to introducing a universal neighbour that is on a new PLMN, a neighbour could be universal within an existing PLMN. For each PLMN in the area for which the device is to detect the UEs, the device impersonates the PLMN with downlink channels to which the user equipment will respond. If the PLMN instructs all user equipment to look for one or more frequencies (by for example populating neighbour lists accordingly), and all PLMNs select the same one or more frequencies, the detector need only radiate on this subset of all the possible frequencies. This reduces the complexity of the detector.

### INJECTION OF INTERFERENCE ON A SERVING CELL

Cell reselection may occur at a user equipment for several reasons. One reason for performing cell reselection would be that the signal strength on the serving cell becomes weak. It is thus possible in embodiments to artificially induce a serving cell signal to be determined as weak at user equipment by potentially injecting an interference signal in a region covered by the detector 100, such that any user equipment within that region performs a cell reselection.

In a UMTS cellular system, interference can be injected during the time user equipment is predicted to be performing signal strength measurements. Such an arrangement serves the purpose of being only intermittent, with the result that it minimises the interference caused for user equipment in the detector area on active calls, and for an idle user equipment the user equipment is only receiving or monitoring during the time that the interference is being injected into the area served by the detector. In a UMTS cellular system, discontinuous reception period and timing is typically determined from the broadcast channel of the serving cell so that interference can be transmitted by a detector and injected only at the time user equipment is performing measurement.

In respect of active user equipment the interference injected by a detector may reduce overall communication link quality between user equipment and the serving base station slightly, but the total interference power overtime is particularly small since it only occurs for a small fraction of the time.

Embodiments may enable a large number of new mobile services based on the interaction of user equipment (mobile phones) with real world objects. One benefit to such an arrangement is that it levers existing and widely deployed cellular network systems such that services can be used by a large number of user equipment subscribers.

According to embodiments, interaction with real world objects may be forced to function with existing phones without a requirement for specialised software on the phone. Embodiments aim to establish fast connections with user equipment and thus fast detection by the sensor.

### RAPID TRIGGER USING PRE-AUTHENTICATION

Effective triggering time experienced by an end user may be reduced by introducing a two-step sensing, authentication and validation method.

It will be appreciated that it is possible to acquire an indication of identity from user equipment operating in the vicinity of a sensor in advance of those user equipment being placed against a real world object and being asked to "interact" with that real world object. That is to say, before user equipment is placed on the sensor. It is also possible to pre-authenticate user equipment operating in the vicinity of a sensor.

Subsequent paging of user equipment may be used as a quick way of identifying the user equipment at the most time critical moment of processing a transaction.

A problem exists, however, that according to such a system a UE's identity is not confirmed as authentic at the time of a subsequent paging. It may previously have been authenticated, but at the time of paging by IMSI for a transaction to take place, the UE's identity may be falsified. Aspects described herein recognise that it is necessary to carry forward an authentication relationship to the moment of transaction execution.

In some embodiments, a large cell (for example, a femtocell) is operable to identify and authenticate user equipment in the vicinity of a sensor when the user equipment camps on the cell or hands over. These captured and authenticated user IDs are exchanged with the sensor. The sensor which operates to provide a short range coverage area transmits a low power paging message for each "captured" mobile in the larger cell. The power of the paging message is configured such that a mobile only responds when in the target sensing range (for example, within a few centimetres from the sensor for mobile payment). Once a mobile responds to a paging message, the sensor uses information obtained by the larger cell to interrogate the user equipment and verify its identity without the need for a full authentication protocol to be performed. That is to say, no full contact with the core network is required, and a "security check" is made based on verification credentials pre-determined by a full authentication process. This will speed up the "effective" triggering process since the initial camping and authentication process that takes the majority of time is performed in advance when the mobile enters a larger cell.

The paging message sent by the sensor results in the establishment of a radio resource control (RRC) communication with the UE. Over this connection, the base station requests that the UE integrity protects or ciphers messages transmitted based on predetermined verification credentials. Only the authenticated UE could integrity protect or cipher information transmitted since it knows the pre-determined verification credentials. Hence, the sensor can be confident of the authentic identity of the UE and therefore attribute a transaction or other action to the correct pre-authenticated UE.

Embodiments are now described in which the principles of integrity protection/ciphering of messages to prove authenticity are described further.

According to some embodiments, the following steps are performed:
1. Detection of UE at a "far distance" from the sensor (provision of a long range cell);
2. Pre-authentication of the UE determined to be in that long range cell;
3. Establishment of new authenticated identity validation credentials;
4. Paging UE in the long range cell continuously on a low power paging channel over a shorter range so as to only solicit a response at very close proximity;
5. On UE response, requesting information / establishing communications with UE to test the authentication relationship, based on newly established verification credentials.
6. Transaction proceeds if authentication relationship is verified, ie the verification credentials (cipher/integrity key held by UE is verified cryptographically as good).

By way of an example, a mobile payment application in a shop with multiple tills, in addition to the secure identification of the UE to facilitate correct billing, is described below. In such an example, it will be appreciated that it is important to minimize delays in obtaining the mobile identifier at the cellular sensor, to ensure no undue delay occurs at the tills.

Figure 4 illustrates schematically a method according to one embodiment employing cellular sensing with femtocell based pre-authentication. In this embodiment, a femtocell covers the area of the shop, or around the tills, as shown.

When a mobile user (400) enters the shop, UE (410, 420) camps/hands over from a macrocell (not shown) to the femtocell (400). The identity of a UE (410, 420) gets authenticated during this process by the core macrocell network. For this, known and standardized mobility procedures are used. Dependant on the phone, the process may take a few seconds.

The femtocell (400) then transmits information required for paging and verifying the identity of each mobile (identification, authentication information, encryption keys, etc) to a cellular sensor (450, 460) provided at each till (430, 440). This allows each cellular sensor to continuously page each UE (410, 420) in the femtocell coverage area. The power of the paging signal is configured such that it can be detected only a few centimetres away from each short range cellular sensor. For other applications, a larger detection range may be required, which can be configured by an appropriately increased transmit power of the paging signal.

Communication between the femtocell and the cellular sensors (450, 460) is preferably done via a backhaul connection, either directly or via a mobile operator's network (MNO), but other means such as wireless information exchange are possible.

When an end user swipes the UE (410, 420) over a sensor (450, 460) to facilitate payment, the UE (410, 420) responds to a paging message transmitted continuously by the sensors (450, 460). Following the response to a paging message, the sensor establishes communications with the UE and tests the authentication relationship. If the authentication relationship is verified (cipher/integrity key held by UE verified cryptographically as good), payment is triggered by sending information on the authenticated user ID and payment amount to the user's mobile wallet service residing in the MNO's core network. Since the mobile has been pre-authenticated and can be paged directly, it responds much faster, at the point of sale, than may otherwise be possible. This significantly reduces the effective triggering time compared to existing solutions.

Such an approach can be most effectively used when a shop provider provides cellular service within the shop.

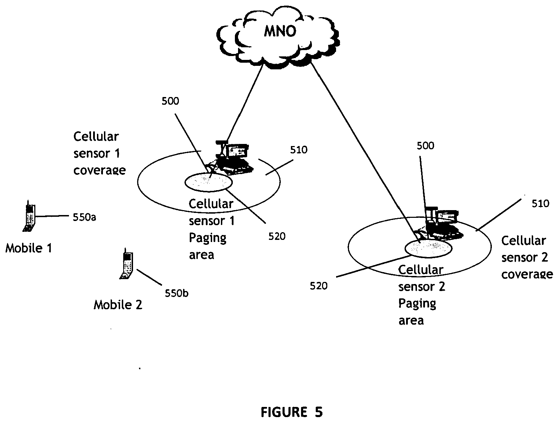

Figure 5 illustrates schematically a method according to one embodiment employing cellular sensing with sensor based pre-authentication. In such an embodiment, rather than using a femtocell for pre-authentication, the pre-authentication can be carried out by a cellular sensor which does not provide cellular coverage. This approach can be used when a shop provider is not interested in providing a full cellular service using a femtocell.

As shown in Figure 5, each sensor (500) transmits a first pilot signal that is configured to cover a larger area than the sensing (paging) area. This allows UE (550) to use "camp on" procedures when entering the first area 510, so the sensor can perform authentication of the mobile in advance of a sensing (paging) event. Once a UE is in area 510 and has been identified and authenticated, the sensor can begin paging the UE (550) at a low power, such that the paging message can only be detected within the intended sensing area 520.

When an end user swipes a UE (550a, 550b) over the sensor (500) for payment, the UE will respond to the paging message. Following a response to the paging message, the sensor establishes communications with the UE to test the authentication relationship. If the authentication relationship is verified; namely, the cipher/integrity key held by UE is verified cryptographically as good, the payment is triggered by transmitting information regarding the authenticated user ID and payment amount to the user's mobile wallet service residing in an MNO's (Mobile Network Operator's) core network. Since the mobile is pre-authenticated at the time it is paged directly, it can respond and be verified quickly. This significantly reduces the effective sensor triggering time compared to existing solutions.

The coverage of the two areas supported by a single sensor or interrogation unit may in some embodiments be optimized by observing time differences between "camping and authentication", and an actual "sensing event". If there is a large time difference between "camping and authentication" and "sensing" events, this may indicate that the pilot coverage of a sensor is too large. This can be sub-optimal since a UE which is located in area 510 cannot make or receive any calls while camped on the sensor's pilot signal. In such a case, the pilot power of a sensor may be reduced by a predetermined step. If there is no time difference between events, this can indicate that a sensor pilot coverage is too small. This can be sub-optimal, since it can result in a sensing delay. If there is no gap between events, "camping and authentication" is not completed before the "sensing" event. In such a case, the pilot signal may be reduced by a predetermined step. The time difference observed between "camping and authentication" and "sensing" events can, according to embodiments, be monitored, and the coverage areas 510, 520 optimized based on predetermined values as an iterative process.

In some embodiments, once a communication link with user equipment is established, for example, via paging, the method may comprise repeatedly requesting a set of power measurement reports from the UE. In some embodiments, those measurement reports may be used to calculate an estimate of distance to user equipment from a sensor. In some embodiments, upon a power measurement crossing a predetermined threshold, an action is performed. Accordingly, contact may be established with pre-authorised user equipment before it is in direct contact with a verification sensor, and only once it is determined to be in very close promxinimy, as indicated by a measurement report crossing a predetermined threshold, the verification sensor will perform a predetermined action, for example, opening a door or downloading a timetable.

This is an enhancement to, for example, simply paging the UE and receiving a response, and verifying pre-determined credentials before trigger an action. The enhancement reduces the latency between touching a phone against a verification or proximity sensor and the transaction being performed. In some embodiments, use of paging to trigger a transaction may introduce delays. For example, a UE may take time to respond to the paging messages due a discontinuous reception cycle (DRx cycle) used to reduce power consumption. A DRx cycle may last somewhere between a couple of hundred milliseconds through to a few seconds.

To mitigate such delays and allow an action carried out more promptly, or immediately, in some embodiments user equipment may be contacted, for example, paged, in advance of being at the critical location to setup a connection with the sensor. A cellular sensor device, such as a verification unit, then requests a receive power measurement from the UE to establish its proximity to it and/or other transmitters, for example, other verification units. The transmitters can be housed in the sensor unit and/or be combined with transmitters housed in separate units, perhaps femto cells or other base stations. In some embodiments, measurements can be requested frequently, for example, many times per second, frequent measurement may allow better knowledge of a UEs proximity and/or rate of approach and thus speed up the time of detection.

In some embodiments, upon an indication of power measurement passing a critical threshold, a further action or transaction is performed.

### Integrity Protection

It is necessary to integrity protect messages transferred from UE to a mobile network base station or to the sensor. Embodiments use a pre-existing authentication/cipher relationship to create a simpler authentication verification relationship implicitly to prove a UE identity through control and data messages which are exchanged and protected at a later time. The authentication relationship can be established as part of procedures described above, for example, by a long range femtocell or a high power pilot radiated by the sensor device for the purpose of identifying UEs in the vicinity. On first contact with sensor network elements, UE is authenticated, a cipher key and cipher relationship is shared with sensor devices. Provided the cipher relationship is shared with each paging device, those paging devices can determine whether UE are those previously authenticated UE, and thus quickly determine if the transaction should execute or not, without the need to perform a full further authentication procedure.

For example, a paging request which is answered may be followed by a request for a measurement report. The measurement report may be requested from the UE with integrity protection. The measurement report must be integrity protected. If the integrity of the message is confirmed using the cipher relationship established with the UE, a paging sensor can be confident that the communicating UE is the intended UE. Many other integrity protected or ciphered messages transmitted by UE can be requested in this manner.

Embodiments take mechanisms of authentication and subsequent integrity/cipher protection and use them for fast secure UE identification. This allows a UE to be used for example, for opening a door, making a point of sale payment at a retail store or giving out address details, all by swiping a phone past a sensor.

In other words, embodiments provide a method which can reduce the sensing time required by a cellular sensor without compromising security. Pre-authentication of UE before it comes into sensing range helps with speed. Integrity protection of messages and ciphering of data proves authenticity of pre-authenticated UEs at the time critical moment of executing a transaction. It will be appreciated that a short time required to sense/identify/authenticate a mobile phone is critical for some applications, such as mobile payment.

Embodiments reduce the sensing time at the critical moment of transaction execution in cellular sensors from several seconds to less than one second without compromising security.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A pre-authentication method performed by interaction between a pre-authentication unit and a verification unit (500), wherein the method establishes a set of user equipment verification credentials from an authentication protocol within a wireless communications network, said method comprising, at the pre-authentication unit:
receiving an indication representative of downlink radio communication characteristics of network nodes recognisable by the user equipment;
emulating the downlink radio communication characteristics of at least one of the network nodes to establish communication with the user equipment;
triggering release of an indication of identity by user equipment for those user equipment (550a, 550b) determined to be in a predetermined geographic discovery area (510);
authenticating said user equipment identity using said authentication protocol, and
establishing a shared set of user equipment verification credentials for future validation of said authenticated user equipment identity;
transmitting the indication of user equipment identity and an indication of the shared set of user equipment verification credentials for those authenticated user equipment determined to be in the predetermined geographic discovery area to the verification unit (500) interacting with the pre-authentication unit such that the verification unit operates to verify the identity of those authenticated user equipment (550a, 550b),
wherein establishing a shared set of user equipment verification credentials for future validation of said authenticated user equipment identity prevents a requirement for further authentication of said user equipment identity using said authentication protocol by said verification unit (500).

2. The method according to claim 1, wherein said authenticating step comprises:
communicating with a core network of a service provider to authenticate said user equipment identity using said authentication protocol.

3. The method according to any preceding claim, wherein said authentication protocol comprises authentication of user equipment identity by means of a cryptographic shared secret.

4. The method according to any preceding claim, wherein said shared set of user equipment credentials comprise at least one new shared secret.

5. The method in accordance with any of claim 1 to 4 further comprising, at the verification unit:
receiving, from the pre-authentication unit, the indication of user equipment identity and the indication of the shared set of user equipment verification credentials for those authenticated user equipment determined to be in the predetermined geographic discovery area (510);
paging those authenticated user equipment determined to be in said predetermined geographic discovery area using said indication of user equipment identity;
once a user equipment responds to its page, interrogating said user equipment using said indication of a shared set of user equipment credentials;
receiving a response from said user equipment; and
verifying said identity of said authenticated user equipment if said received response matches that predicted by said indication of a shared set of user equipment verification credentials.

6. A method according to claim 5, further comprising:
determining a time difference between authenticated user equipment entering said predetermined geographic discovery area (510) and authenticated user equipment responding to said paging.

7. A method according to claim 6, further comprising calculating an indication of average time difference across a set of authenticated user equipment.

8. A method according to claim 6 or claim 7, further comprising:
adjusting said predetermined geographic discovery area and/or a predetermined paging area in response to said determined time difference.

9. A computer program product, operable when executed on a computer, to perform the method of any one of claims 1 to 8.

10. A system comprising a pre-authentication unit and a verification unit (500), the pre-authentication unit operable to establish a set of user equipment verification credentials from an authentication protocol within a wireless communications network, said pre-authentication unit comprising:
reception logic operable to receive an indication representative of downlink radio communication characteristics of network nodes recognisable by the user equipment;
emulation logic operable to emulate the downlink radio communication characteristics of at least one of the network nodes to establish communication with the user equipment;
triggering logic operable to trigger release of an indication of identity by said user equipment for those user equipment (5501, 550b) determined to be in a predetermined geographic discovery area (510);
authentication logic operable to authenticate said user equipment identity using said authentication protocol,
verification logic operable to establish a shared set of user equipment verification credentials for future validation of said authenticated user equipment identity;
transmission logic operable to transmit the indication of user equipment identity and an indication of the shared set of user equipment verification credentials for those authenticated user equipment determined to be in the predetermined geographic discovery area to the verification unit (500) that, in response thereto, is operable to verify the identity of those authenticated user equipment (550a, 550b),
wherein establishing a shared set of user equipment verification credentials for future validation of said authenticated user equipment identity prevents a requirement for further authentication of said user equipment identity using said authentication protocol by said verification unit (500).

11. The system of claim 10, wherein said verification unit comprises:
reception logic operable to receive, from the pre-authentication unit, the indication of user equipment identity and an indication of a shared set of user equipment verification credentials for those authenticated user equipment determined to be in the predetermined geographic discovery area (510);
means for paging those authenticated user equipment determined to be in said predetermined geographic discovery area using said indication of user equipment identity; reception logic operable to receive a response from paged user equipment;
interrogation logic operable, once a user equipment responds to its page, to interrogate said user equipment (550a, 550b) using said indication of a shared set of user equipment credentials;
reception logic operable to receive a response from said user equipment; and
verification logic operable to verify said identity of said authenticated user equipment if said received response matches that predicted by said indication of a shared set of user equipment verification credentials.

## Patentansprüche

1. Vor-Authentifizierungsverfahren, das durch Interaktion zwischen einer Vor-Authentifizierungseinheit und einer Verifikations-Einheit (500) durchgeführt wird, wobei das Verfahren eine Reihe von Benutzereinrichtungs-Verifikations-Berechtigungsnachweisen aus einem Authentifizierungsprotokoll innerhalb eines drahtlosen Kommunikationsnetzwerks erstellt, wobei das Verfahren in der Vor-Authentifizierungseinheit folgende Schritte umfasst:
- Empfangen einer Angabe, die für die Downlink-Funkkommunikationsmerkmale von Netzknoten repräsentativ ist, die von der Benutzereinrichtung erkennbar sind;
- Nachbilden der Downlink-Funkkommunikationsmerkmale von mindestens einem der Netzwerkknoten, um eine Verbindung mit der Benutzereinrichtung herzustellen;
- Auslösen der Ausgabe einer Angabe der Identität mittels der Benutzereinrichtung für diejenigen Benutzereinrichtungen (550a, 550b), bei denen festgestellt worden ist, dass diese sich in einem vorbestimmten geographischen Erkennungsgebiet (510) befinden;
- Authentifizieren der Benutzereinrichtungs-Identität unter Verwendung des Authentifizierungsprotokolls, und
- Einrichten einer gemeinsamen Reihe von Benutzereinrichtungs-Verifikations-Berechtigungsnachweisen für die zukünftige Validierung der Identität der authentifizierten Benutzereinrichtung;
- Übertragen der Angabe der Benutzereinrichtungs-Identität und einer Angabe der gemeinsamen Reihe von Benutzereinrichtungs-Verifikations-Berechtigungsnach-weisen für diejenigen authentifizierten Benutzereinrichtungen, bei denen festgestellt worden ist, dass diese sich in dem vorbestimmten geographischen Erkennungsgebiet befinden, an die Verifikations-Einheit (500), die mit der Vor-Authentifizierungseinheit derart interagiert, dass die Verifikations-Einheit dazu dient, die Identität dieser authentifizierten Benutzereinrichtungen (550a, 550b) zu verifizieren, wobei das Einrichten einer gemeinsamen Reihe von Benutzereinrichtungs-Verifikations-Berechtigungsnachweisen für die zukünftige Validierung der Identität der authentifizierten Benutzereinrichtung das Erfordernis für eine weitere Authentifizierung der Benutzereinrichtungs-Identität unter Verwendung des Authentifizierungsprotokolls durch die Verifikations-Einheit (500) entfallen lässt.

2. Verfahren nach Anspruch 1,
wobei der Authentifizierungsschritt folgenden Schritt umfasst:
Kommunizieren mit einem Kernnetzwerk eines Dienstanbieters, um die Benutzereinrichtungs-Identität unter Verwendung des Authentifizierungsprotokolls zu authentifizieren.

3. Verfahren nach einem der vorhergehenden Ansprüche,
wobei das Authentifizierungsprotokoll die Authentifizierung der Benutzereinrichtungs-Identität mittels einer kryptographischen gemeinsamen Verschlüsselung aufweist.

4. Verfahren nach einem der vorhergehenden Ansprüche,
wobei die gemeinsame Reihe von Benutzereinrichtungs-Anmeldeinformationen mindestens eine neue gemeinsame Verschlüsselung aufweist.

5. Verfahren nach einem der Ansprüche 1 bis 4,
das ferner in der Verifikations-Einheit folgende Schritte umfasst:
- Empfangen, und zwar von der Vor-Authentifizierungseinheit, der Angabe der Benutzereinrichtungs-Identität und der Angabe der gemeinsamen Reihe von Benutzereinrichtungs-Verifikations-Berechtigungsnachweisen für diejenigen authentifizierten Benutzereinrichtungen, bei denen festgestellt worden ist, dass diese sich in dem vorbestimmten geografischen Erkennungsgebiet (510) befinden;
- Aufrufen von denjenigen authentifizierten Benutzereinrichtungen, bei denen festgestellt worden ist, dass diese sich in dem vorbestimmten geografischen Erkennungsgebiet befinden, und zwar unter Verwendung der Angabe der Benutzereinrichtungs-Identität;
- sobald eine Benutzereinrichtung auf ihren Aufruf reagiert, Abfragen der Benutzereinrichtung unter Verwendung der Angabe einer gemeinsamen Reihe von Benutzereinrichtungs-Verifikations-Berechtigungsnachweisen;
- Empfangen einer Antwort von der Benutzereinrichtung; und
- Verifizieren der Identität der authentifizierten Benutzereinrichtung, wenn die empfangene Antwort mit derjenigen übereinstimmt, die durch die Angabe einer gemeinsamen Reihe von Benutzereinrichtungs-Verifikations-Berechtigungsnachweisen vorhergesagt wird.

6. Verfahren nach Anspruch 5,
das ferner folgenden Schritt umfasst:
Bestimmen einer Zeitdifferenz zwischen einer authentifizierten Benutzereinrichtung, die in das vorbestimmte geografische Erkennungsgebiet (510) eintritt, und einer authentifizierten Benutzereinrichtung, die auf das Aufrufen reagiert.

7. Verfahren nach Anspruch 6,
das ferner folgenden Schritt umfasst:
Berechnen einer Angabe der durchschnittlichen Zeitdifferenz für eine Reihe von authentifizierten Benutzereinrichtungen,

8. Verfahren nach Anspruch 6 oder Anspruch 7,
das ferner folgenden Schritt umfasst:
Anpassen des vorbestimmten geographischen Erkennungsgebiets und/oder eines vorbestimmten Aufrufgebiets als Reaktion auf die bestimmte Zeitdifferenz.

9. Computerprogramm-Produkt, das bei Ausführung auf einem Computer derart betreibbar ist, dass das Verfahren gemäß einem der Ansprüche 1 bis 8 durchgeführt wird.

10. System, das eine Vor-Authentifizierungseinheit und eine Verifikations-Einheit (500) aufweist,
wobei die Vor-Authentifizierungseinheit so betreibbar ist, dass diese eine Reihe von Benutzereinrichtungs-Verifikations-Berechtigungsnachweisen von einem Authentifizierungsprotokoll innerhalb eines drahtlosen Kommunikationsnetzwerks erstellt, wobei die Vor-Authentifizierungseinheit Folgendes aufweist:
- eine Empfangslogik, die so betreibbar ist, dass diese eine Angabe empfängt, die für die Downlink-Funkkommunikationsmerkmale von Netzknoten repräsentativ ist, die von der Benutzereinrichtung erkannt werden können;
- eine Emulationslogik, die so betreibbar ist, dass diese die Downlink-Funkkommunikationsmerkmale von mindestens einem der Netzwerkknoten nachbildet, um eine Kommunikation mit der Benutzereinrichtung herzustellen;
- eine Auslöselogik, die so betreibbar ist, dass sie die Ausgabe einer Identitätsangabe durch die Benutzereinrichtung für die Benutzereinrichtungen (5501, 550b) auslöst, bei denen festgestellt worden ist, dass diese sich in einem vorbestimmten geographischen Erkennungsgebiet (510) befinden;
- eine Authentifizierungslogik, die so betreibbar ist, dass diese die Benutzereinrichtungs-Identität unter Verwendung des Authentifizierungsprotokolls authentifiziert,
- eine Verifikationslogik, die so betreibbar ist, dass eine gemeinsame Reihe von Benutzereinrichtungs-Verifikations-Berechtigungsnachweisen für die zukünftige Validierung der authentifizierten Benutzereinrichtung erstellt wird;
- eine Übertragungslogik, die so betreibbar ist, dass die Angabe der Benutzereinrichtungs-Identität und eine Angabe der gemeinsamen Reihe von Benutzereinrichtungs-Verifikations-Berechtigungsnachweisen für diejenigen authentifizierten Benutzereinrichtungen, bei denen festgestellt wird, dass diese sich in dem vorbestimmten geographischen Erkennungsgebiet befinden, an die Verifikations-Einheit (500) übermittelt wird, die als Reaktion hierauf so betreibbar ist, dass die Identität dieser authentifizierten Benutzereinrichtungen (550a, 550b) verifiziert wird, wobei das Einrichten einer gemeinsamen Reihe von Benutzereinrichtungs-Verifikations-Berechtigungsnachweisen für die zukünftige Validierung der Identität der authentifizierten Benutzereinrichtung das Erfordernis für eine weitere Authentifizierung der Benutzereinrichtungs-Identität unter Verwendung des Authentifizierungsprotokolls durch die Verifikations-Einheit (500) entfallen lässt.

11. System nach Anspruch 10,
wobei die Verifikations-Einheit Folgendes aufweist:
- eine Empfangslogik, die so betreibbar ist, dass von der Vor-Authentifizierungseinheit die Angabe der Benutzereinrichtungs-Identität und eine Angabe einer gemeinsamen Reihe von Bemitzereinrichtungs-Verifikations-Berechtigungsnachweisen für diejenigen authentifizierten Benutzereinrichtungen empfangen wird, bei denen festgestellt worden ist, dass diese sich in dem vorbestimmten geographischen Erkennungsgebiet (510) befinden;
- Einrichtungen zum Aufrufen derjenigen authentifizierten Benutzereinrichtungen, bei denen festgestellt worden ist, dass diese sich in dem vorbestimmten geographischen Erkennungsgebiet befinden, und zwar unter Verwendung der Angabe der Benutzereinrichtungs-Identität;
- eine Empfangslogik, die so betreibbar ist, dass eine Antwort von einer aufgerufenen Benutzereinrichtung empfangen wird;
- eine Abfragelogik, die so betreibbar ist, dass, sobald eine Benutzereinrichtung auf ihren Aufruf reagiert, die Benutzereinrichtung (550a, 550b) unter Verwendung der Angabe einer gemeinsamen Reihe von Benutzereinrichtungs-Berechtigungsnachweisen abgefragt wird;
eine Empfangslogik, die so betreibbar ist, dass eine Antwort von der aufgerufenen Benutzereinrichtung empfangen wird; und
- eine Verifikationslogik, die so betreibbar ist, dass die Identität der authentifizierten Benutzereinrichtung verifiziert wird, wenn die empfangene Antwort mit derjenigen übereinstimmt, die durch die Angabe einer gemeinsamen Reihe von Benutzereinrichtungs-Verifikations-Berechtigungsnachweisen vorhergesagt wird.

## Revendications

1. Procédé de pré-authentification effectué par une interaction entre une unité de pré-authentification et une unité de vérification (500), selon lequel le procédé établit un ensemble d'identifiants de vérification d'équipement utilisateur à partir d'un protocole d'authentification au sein d'un réseau de communication sans fil, ledit procédé comprenant, au niveau de l'unité de pré-authentification :
la réception d'une indication représentative de caractéristiques de communication radio de liaison descendante de nœuds réseau reconnaissables par l'équipement utilisateur ;
l'émulation des caractéristiques de communication radio de liaison descendante d'au moins un des nœuds réseau afin d'établir une communication avec l'équipement utilisateur ;
le déclenchement de la libération d'une indication d'identité par l'équipement utilisateur pour les équipements utilisateurs (550a, 550b) ayant été calculés comme se trouvant dans une zone géographique de découverte prédéterminée (510) ;
l'authentification dudit identifiant d'équipement utilisateur mettant en œuvre ledit protocole d'authentification, et l'établissement d'un ensemble partagé d'identifiants de vérification d'équipement utilisateur pour de la validation future de ladite identité dudit équipement utilisateur authentifié ;
la transmission de l'indication de l'identité d'équipement utilisateur et d'une indication de l'ensemble partagé d'identifiants de vérification d'équipement utilisateur pour les équipements utilisateurs ayant été calculés comme se trouvant dans la zone géographique de découverte prédéterminée à l'unité de vérification (500) interagissant avec l'unité de pré-authentification de sorte que l'unité de vérification fonctionne de manière à vérifier l'identité des équipements utilisateurs authentifiés (550a, 550b), selon lequel l'établissement d'un ensemble partagé d'identifiants de vérification d'équipement utilisateur pour de la validation future de ladite identité d'équipement utilisateur authentifié empêche la nécessité d'une authentification supplémentaire de ladite identité d'équipement utilisateur mettant en œuvre ledit protocole d'authentification par ladite unité de vérification (500).

2. Procédé selon la revendication 1, selon lequel ladite étape d'authentification comprend la communication avec un réseau cœur d'un fournisseur de service afin d'authentifier ladite identité d'équipement utilisateur mettant en œuvre ledit protocole d'authentification.

3. Procédé selon l'une quelconque des revendications précédentes, selon lequel ledit protocole d'authentification comprend l'authentification de l'identité d'équipement utilisateur par le biais d'un secret partagé chiffré.

4. Procédé selon l'une quelconque des revendications précédentes, selon lequel ledit ensemble partagé d'identifiants d'équipement utilisateur comprend au moins un nouveau secret partagé.

5. Procédé selon l'une quelconque des revendications 1 à 4, comprenant en outre, au niveau de l'unité de vérification :
la réception, en provenance de l'unité de pré-authentification, de l'indication de l'identité d'équipement utilisateur et de l'indication de l'ensemble partagé de d'identifiants de vérification d'équipement utilisateur pour les équipements utilisateurs authentifiés ayant été calculés comme se trouvant dans la zone géographique de découverte prédéterminée (510) ;
la sollicitation des dits équipements utilisateurs authentifiés ayant été calculés comme se trouvant dans ladite zone géographique de découverte prédéterminée mettant en œuvre l'indication de ladite identité d'équipement utilisateur ;
lorsqu'un équipement utilisateur aura répondu à la sollicitation, l'interrogation dudit équipement utilisateur mettant en œuvre ladite indication d'un ensemble partagé d'identifiants d'équipement utilisateur ;
la réception d'une réponse en provenance dudit équipement utilisateur ; et
la vérification de ladite identité dudit équipement utilisateur authentifié si ladite réponse reçue correspond à celle prédité par ladite indication d'un ensemble partagé d'identifiants de vérification d'équipement utilisateur.

6. Procédé selon la revendication 5, comprenant en outre le calcul d'une différence de temps entre l'entrée d'équipement utilisateur authentifié dans ladite zone géographique de découverte prédéterminée (510) et la réponse de l'équipement utilisateur authentifié à ladite sollicitation.

7. Procédé selon la revendication 6, comprenant en outre le calcul d'une indication d'une différence de temps moyenne à travers un ensemble d'équipements utilisateurs authentifiés.

8. Procédé selon la revendication 6 ou la revendication 7, comprenant en outre l'ajustage de ladite zone géographique de découverte prédéterminée et/ou d'une zone de sollicitation prédéterminée en réponse à ladite différence de temps calculée.

9. Produit de programme d'ordinateur, opérable lorsqu'il est exécuté par un ordinateur pour faire effectuer le procédé selon l'une quelconque des revendications 1 à 8.

10. Système comprenant une unité de pré-authentification et une unité de vérification (500), l'unité de pré-authentification étant opérable pour établir un ensemble d'identifiants de vérification d'équipement utilisateur à partir d'un protocole d'authentification au sein d'un réseau de communication sans fil, ladite unité de pré-authentification comprenant :
de la logique de réception opérable pour recevoir une indication représentative de caractéristiques de communication radio de liaison descendante de nœuds réseau reconnaissables par l'équipement utilisateur ;
de la logique d'émulation opérable pour émuler les caractéristiques de communication radio de liaison descendante d'au moins un des nœuds réseau afin d'établir une communication avec l'équipement utilisateur ;
de la logique de déclenchement opérable pour déclencher la libération d'une indication d'identité par ledit équipement utilisateur pour les équipements utilisateurs (5501, 550b) ayant été calculés comme se trouvant dans une zone géographique de découverte prédéterminée (510) ;
de la logique d'authentification opérable pour authentifier ladite identité d'équipement utilisateur mettant en œuvre ledit protocole d'authentification ;
de la logique de vérification opérable pour établir un ensemble partagé d'identifiants de vérification d'équipement utilisateur pour de la validation future de ladite identité dudit équipement utilisateur authentifié ;
de la logique de transmission opérable pour transmettre l'indication de l'identité d'équipement utilisateur et une indication de l'ensemble partagé de d'identifiants de vérification d'équipement utilisateur pour les équipements utilisateurs authentifiés ayant été calculés comme se trouvant dans la zone géographique de découverte prédéterminée à l'unité de vérification (500) qui, en réponse à cette transmission, est opérable pour vérifier l'identité des équipements utilisateurs authentifiés (550a, 550b) ;
selon lequel l'établissement d'un ensemble partagé d'identifiants de vérification d'équipement utilisateur pour de la validation future de ladite identité dudit équipement utilisateur authentifié empêche la nécessité d'une authentification supplémentaire de ladite identité d'équipement utilisateur mettant en œuvre ledit protocole d'authentification par ladite unité de vérification (500).

11. Système selon la revendication 10, selon lequel ladite unité de vérification comprend :
de la logique de réception opérable pour recevoir, l'indication de l'identité d'équipement utilisateur et l'indication de l'ensemble partagé de d'identifiants de vérification d'équipement utilisateur pour les équipements utilisateurs authentifiés ayant été calculés comme se trouvant dans la zone géographique de découverte prédéterminée(510) ;
des moyens de sollicitation des équipements utilisateurs authentifiés ayant été calculés comme se trouvant dans ladite zone géographique de découverte prédéterminée mettant en œuvre l'indication de ladite identité d'équipement utilisateur;
de la logique de réception opérable pour recevoir une réponse de l'équipement utilisateur sollicité ;
de logique d'interrogation opérable pour, une fois qu'un équipement utilisateur aura répondu à sa sollicitation, interroger ledit équipement utilisateur (550a, 550b) mettant en œuvre ladite indication d'un ensemble partagé d'identifiants d'équipement utilisateur ;
de logique de réception opérable pour recevoir une réponse en provenance dudit équipement utilisateur ; et
de la logique de vérification opérable pour vérifier ladite identité dudit équipement utilisateur authentifié si ladite réponse reçue correspond à celle prédite par ladite indication d'un ensemble partagé d'identifiants de vérification d'équipement utilisateur.
